(19) Europäisches Patentamt

European Patent Office

Office européen des brevets

(11) Publication number: 0 503 552 A1

# EUROPEAN PATENT APPLICATION

(21) Application number: 92104053.1

(22) Date of filing: 10.03.92

(51) Int. Cl.5: G21C 15/18, G21C 9/033

(30) Priority: 11.03.91 SE 9100720

(43) Date of publication of application:
16.09.92 Bulletin 92/38

(84) Designated Contracting States:
CH DE IT LI NL

(71) Applicant: ABB ATOM AB

S-721 83 Västeras(SE)

(72) Inventor: Hannerz, Kare
Raby Rytterne
S-725 92 Västeras(SE)

(74) Representative: Boecker, Joachim, Dr.-Ing.
Rathenauplatz 2-8
W-6000 Frankfurt a.M. 1(DE)

(54) Shut-down system for nuclear water reactor.

(57) A nuclear reactor with a reactor unit, comprising a reactor core with fuel assemblies (60) and flow-controlling parts. The reactor unit is included in a circulation system, containing a diffuser for water with a low content of neutron absorber during normal operation. The reactor unit is further arranged in a pool with water with a higher content of neutron absorber than the water in the circulation system. The water in the pool and the water in the circulation system is adapted, during normal operation, to form interfaces in density locks arranged at different levels in the reactor unit, and the water in the pool is adapted, upon shutdown of the reactor, to penetrate into the reactor unit via the density locks. According to the invention one or more diffusers (67) are arranged with an at least substantially vertical symmetry axis below each one of at least a plurality of the fuel assemblies of the rector core. The arrangement of the diffusers makes them easily accessible for exchange and for adjustment of dimensions. The use of several diffusers below each fuel assemblies allows the height of the reactor to be reduced.

FIG. 1

The invention relates to a nuclear reactor according to the precharacterising part of claim 1.

A nuclear reactor of this kind is described, inter alia, in ABB Journal 2/90 and known under the name PIUS (Process Inherent Ultimate Safety). As neutron absorber there is normally used boron in the form of a water-soluble boron-containing substance, such as boric acid, $H_3BO_3$. In the nuclear reactor described in that publication, one or more heat exchangers and one or more circulation pumps are included in the mentioned circulation system. Outside the pool the circulation system is divided into a number of parallel-connected branches, each of which contains a heat exchanger and a circulation pump. From other publications it is known to arrange heat exchangers and circulation pumps inside the pool.

From SE-B-8102000-0, it is known to arrange, besides a heat exchanger and a circulation pump, a diffuser in the circulation system for water with a low content of neutron absorber in a reactor of PIUS type. The diffuser is then arranged ahead of the reactor core in the direction of the water flow and at the side of the reactor core. The diffuser brings about a pressure increase of the water prior to its inlet into the reactor core, in relation to the surrounding pool water at the same level. This allows the level difference between the upper and the lower density lock, and hence the height of the reactor unit and the nuclear reactor plant in its entirety, to be reduced.

The invention aims at developing an improved arrangement of the diffusers such that their effectiveness and accessibility for exchange and adjustment are increased.

To achieve this aim the invention suggests a nuclear reactor according to the introductory part of claim 1, which is characterized by the features of the characterizing part of claim 1.

Further developments of the invention are characterized by the features of the additional claims.

By the arrangement of the diffusers according to the invention, they can easily, preferably in connection with refuelling, be made available for exchange and for adjustment of dimensions, so that the dimensions can be adapted to provide a desired function of the diffusers. The use of several diffusers below each one of the mentioned fuel assemblies means that the height of the reactor unit can be reduced.

According to a particularly preferred embodiment of the invention, the diffuser/diffusers below each one of the fuel assemblies is/are arranged in an inlet box or other inlet unit for the water in the circulation system. The inlet box or inlet unit may be secured to the respective fuel assembly or only placed below the fuel assembly and handled as a separate unit. Preferably, there is arranged, below the inlet units for all the fuel assemblies, an inlet space for the water which is common to and communicates with the inlet units. Between the inlet space and the density lock which is located at the lower level, there is preferably arranged a buffer space which is separated from the inlet space by a partition and which communicates with the inlet units via individual pipes which penetrate the partition and extend through the inlet space. If several diffusers are arranged in one inlet unit, preferably each one of the individual pipes is formed with an upper part fixed to an inlet unit and a lower part fixed to the partition. These two parts are adapted, during operation of the reactor, to form with each other a connection which is sealed to the surroundings and to be separable when with-drawing the fuel assemblies from the reactor core.

According to a further embodiment of the reactor, diffusers which are located in the periphery of the reactor core are arranged with a smaller flow area than diffusers located in the centre of the reactor core. This embodiment is specially designed to be used in cores with fuel assemblies with fuel channels around the bundle of fuel rods. The measure allows the coolant flow to be adapted to the locally prevailing power density in the core.

By way of example, the invention will now be described in greater detail with reference to the accompanying drawings showing in

Figure 1     a vertical section of a reactor according to the invention

Figure 2     the lowermost part of the reactor unit in the reactor according to Figure 1 on an enlarged scale,

Figure 3     a vertical section taken along line A-A in Fig. 4 of an inlet box for a fuel assembly for a nuclear reactor according to Figure 1,

Figure 4     the inlet box of Figure 3 seen from above,

Figure 5     a vertical section of another inlet unit than that shown in Figures 3 and 4.

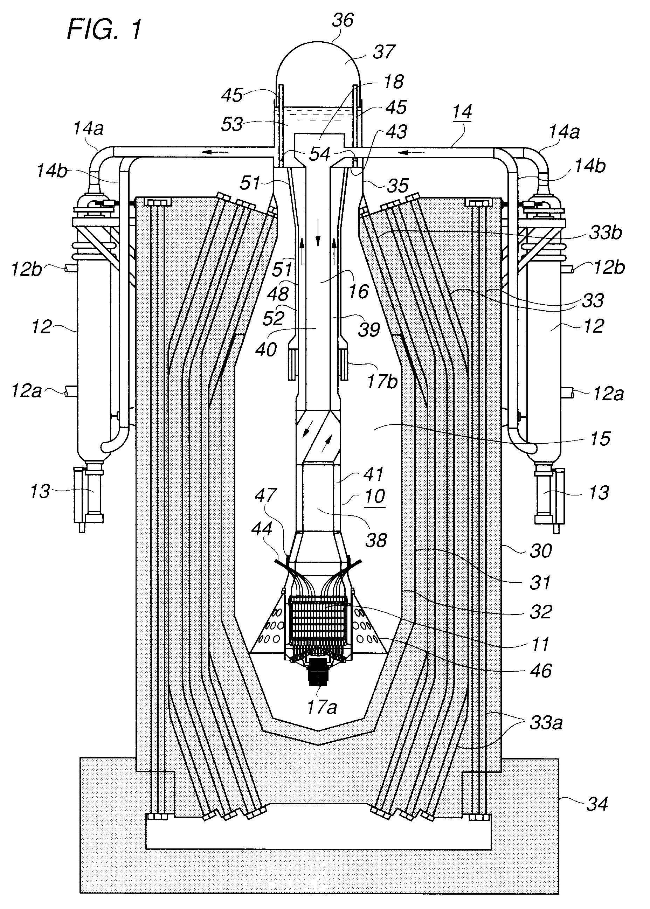

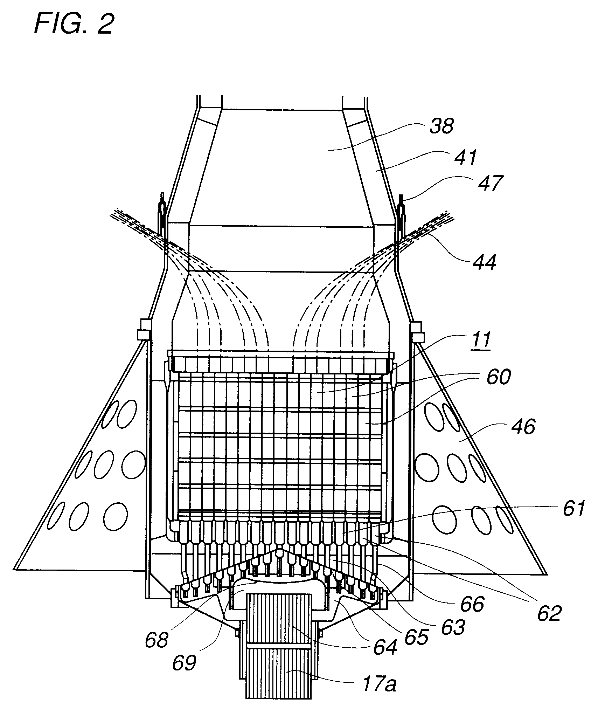

The reactor according to Figures 1 and 2 has a reactor unit 10 comprising a reactor core 11. The reactor unit is part of a circulation system 14 for water which along part of its path is divided into a number of parallel-connected branches, each one with a heat exchanger 12 and a circulation pump 13. The reactor unit is arranged in a pool with water 15 with a high content of neutron absorber. During normal operation of the reactor the water 16 in the circulation system 14 has a considerably lower content of neutron absorber than the water 15 in the pool, and between the water 16 in the circulation system 14 and the water 15 in the pool, interfaces are maintained in density locks 17a and 17b arranged in a lower and a higher level, respectively, in the reactor unit. The heat which is generated in the reactor core is taken out for useful purposes via the water 16 in the circulation system 14 and the heat exchangers 12. When shutting down the reactor, for example by stopping pumps, the water 15 in the pool penetrates via the density locks into the reactor unit and is mixed with the water 16 such that the mixture's content of neutron absorber becomes sufficiently high to prevent criticality.

Of the other parts, shown in Figures 1 and 2, of the exemplified nuclear reactor, the reactor vessel 30 constitutes a pressure vessel in the form of a concrete monolith. It is provided with an embedded (cast-in) steel layer 31 as extra leakage barrier and with a steel lining 32. It is prestressed with prestess cables 33. Certain of these, 33a, are utilized to secure the concrete monolith to the bottom plate 34 of the reactor building and others, 33b, to secure it to an upper part 35-36 of steel. The uppermost part 36 of the vessel is detachably fixed to the part 35, inter alia for refuelling. The water 15 in the pool in the concrete vessel contains a high content, for example about 2000 ppm, of boron in the form of boric acid. The water is cooled by heat exchangers placed inside and outside the pool such that the temperature is normally maintained at about 50° C. The concrete vessel is cooled by the water in the pool and is always cold. The pressure in the whole system is achieved with steam in pressurized steam volume 37. The steam is generated in an external circuit (not shown). The reactivity (power) in the reactor is controlled with the aid of the boron content and the temperature of the water 16. The boron content in this water is below 400 ppm during continuous operation. In one exemplified case, the flowing boron water 16 is heated in the reactor core 11 from 260° C to 290° C. After having left the core, the water rises upwards through the riser 38. Half-way up through the reactor unit the flow is transferred to an annular gap 39 around a centrally placed downcomer 40, through which the water 16 in the circulation system 14 is conducted to the reactor core. Above annular gap 39, the heated water 16 in the exemplified case leaves the reactor vessel through four circulation pipes, two of which -both designated 14a- are shown in Figure 1. Thus, these pipes form parts of four parallel-connected branches in the circulation system 14. The mentioned circulation pumps 13 suck the water 16 to the heat exchangers 12, which perform as steam generators. Connections for supply and discharge of a medium to be heated, supplied on the secondary side, are designated 12a and 12b, respectively. The circulation pumps 13 are arranged in lower chambers of the steam generators. From the circulation pumps the cooled water 16 flows via four circulation pipes 14b, of which two are shown in Figure 1, back to the reactor vessel and into the downcomer 40. However, before that, the water 16 is led into an inlet chamber 18 before it passes into the downcomer. From the downcomer the flow continues through an annular gap 41 on the outside of the riser 38 and enters the core thus completing the circuit in the circulation system 14. The riser 38, the annular gap 39, the downcomer 40 and the annular gap 41 constitute in all essentials the internal flow-controlling parts in the reactor.

The water 15 in the pool with a high boron content and the water 16 in the circulation system with a low boron content are maintained, during operation, stably separated in predetermined positions in the density locks 17a and 17b by keeping the pump circulation in the circuit 14 within definite limits. If the pump circulation should be too small or too great, water 15 from the pool with a high boron content would penetrate in through the lower density lock 17a and through the upper density lock 17b, respectively, resulting in the nuclear reaction in the reactor core being stopped. Each density lock consists of a bundle of long pipes, open at both ends, which at their lower end are welded to a perforated end plate.

Further, in Figure 1, numeral 44 designates core instrumentation, 46 a perforated support skirt for the parts of the reactor which are located in the concrete vessel, 47 a flange which can be opened, for example in connection with refuelling, 45 a number of connecting pipes between the steam volume 37 and cold water with a high boron content in the pool, 54 the level of the latter water in the connecting pipes, 48 and 51 two pipes which form between them an annular gap 52 extending from the upper edge 43 of the riser 38/the annular gap 39 down to the upper density lock 17b. The annular gap 52 communicates with annular gap 39 via the space 53 with water with a low boron content around the inlet chamber 18.

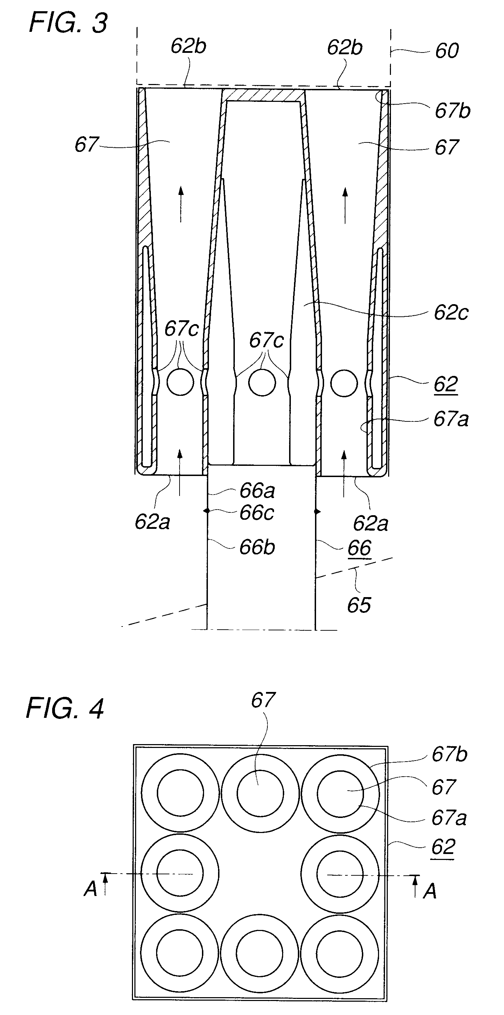

As is more clearly shown in Figure 2, the reactor core 11 comprises a large number, for example over 200, of fuel assemblies 60, each on comprising a large number, for example 18 x 18, of fuel rods. The fuel assemblies are arranged on a core supporting plate 61. An inlet unit 62 for water from the gap 41 is, in the illustrated embodiment, secured to the lower inlet on each fuel assembly and is together with the fuel assembly withdrawable from the core supporting plate. The inlet 62a (see Figures 3 to 5) of the inlet units communicates openly with a common inlet space 63, arranged below them, for the water 16 from the gap 41, and their outlet 62b communicates openly with the space between the fuel rods in the fuel assemblies. Between the inlet space 63 and the lower density lock 17a, a buffer volume 64 is arranged which contains water with a low boron content. This space is separated from the inlet space 63 by a partition 65. The buffer volume is arranged in communicating connection with each one of the inlet units in a manner which will be described below via individual pipes 66 which penetrate the partition 65 and extend through the inlet space 63. In the case illustrated in Figures 3 and 4, each such pipe has an upper part 66a secured to the inlet unit in the form of an inlet box, and a lower part 66b secured to the partition 65. These parts are adapted, during operation of the reactor, to form with each other a connection sealed against the surrounding inlet space 63, for example by metallic surfaces contacting each other (in Fig. 3 schematically shown by a seal 66c), and to be separable when withdrawing the fuel assemblies, such as during refuelling. Since each inlet box, as mentioned previously, is secured to its fuel assembly in the illustrated embodiment, the inlet box can be lifted out of the core together with the fuel assembly. In the case where the inlet box is placed below the fuel assembly without being secured to it, the inlet box can be lifted out of the core as a separate unit.

Each inlet box 62, in the case exemplified in Figures 3 and 4, contains eight diffusers 67. Each diffuser has a circular cross section perpendicular to its symmetry axis, that is perpendicular to the direction of flow of the water through the diffuser. The diameter where the cross section is largest, at 67b, may suitably be 1.03-2.5, preferably 1.2-2.0 times as large as where the cross section is smallest, at 67a. The water 16 from the gap 41 and the inlet space 63. during normal operation, passes into the inlet boxes 62 at their inlets 62a and out at their outlets 62b and thus passes each diffuser 67 from its inlet 67a to its outlet 67b. During the passage a pressure increase in the water takes place. When the reactor is shut down, such as during a pump stop, the water 15 in the pool penetrates via the density lock 17a into the buffer volume 64, from there through the pipes 66 into a space 62c located in each inlet box and surrounded by the diffusers, from there via holes 67c provided in the diffusers into the diffusers and from there into the fuel assemblies 60 in the reactor core 11.

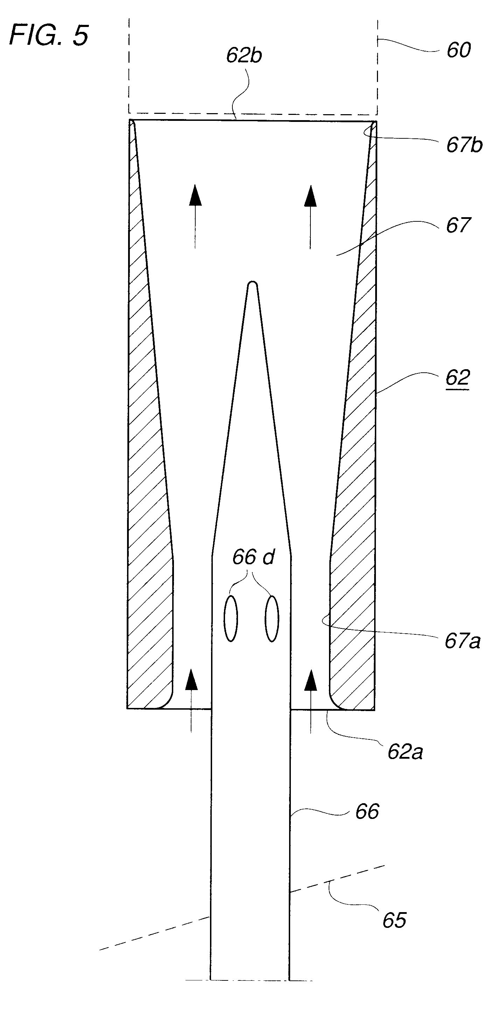

Figure 5 shows an example of an inlet unit 62 with only one diffuser 67 for each fuel assembly of a nuclear reactor according to the invention. In this embodiment the pipe 66 is arranged centrally in the diffuser without being secured to the inlet unit. It has a cross section, the upper part of which is tapering in a vertical direction. The holes 66d which connect the interior of the pipe 66 to the diffuser 67, and the function of which is analogous to the function of the holes 67c in Figure 3, are arranged in the pipe 66. The inlet unit can be lifted out of the core together with the fuel assembly.

In both Figure 3 and Figure 5, the fuel assembly 60 and the partition 65 are indicated in dashed lines.

As is best illustrated in Figure 2, a hood 68 for a gas cushion 69 is arranged in the buffer volume 64, the gas cushion blocking the lower density lock 17a upon start-up of the rector, when the flow in the circulation system 14 is low and the boric acid therein is diluted with pure water until criticality is attained. With continued dilution, the temperature of the water in the circulation system is increased, and the pump speed is adjusted such that the gas cushion can be removed.

**Claims**

1. A nuclear reactor
   - with a reactor unit (10), comprising a reactor core (11) with fuel assemblies (60) and flow-controlling parts (38, 39, 40, 41),
   - with the reactor unit (10) being included in a circulation system (14), containing a diffuser for water (16) with a low content of neutron absorber during normal operation,
   - with the reactor unit (10) being arranged in a pool with water (15) with a higher content of neutron absorber than that in the water in the circulation system,
   - with the water in the pool and the water in the circulation system being adapted, during normal operation, to form interfaces in density locks (17a, 17b) arranged at different levels in the reactor unit, and
   - with the water in the pool being adapted, upon shutdown of the reactor, to penetrate into the reactor unit via the density locks,
   **characterized** in that one or more diffusers (67) are arranged with an at least substantially vertical symmetry axis below each one of at least a plurality of the fuel assemblies of the rector core.

2. A nuclear reactor according to claim 1, **characterized** in that the diffuser/diffusers (67) below each one of the mentioned fuel assemblies (60) is/are arranged in an inlet unit (62) for the water (16) in the circulation system (14) to the fuel assembly, said inlet unit being arranged below the respective fuel assembly.

3. A nuclear reactor according to claim 2, **characterized** in that below the inlet units (62) for all the fuel assemblies (60) there is arranged an inlet space (63) for the water (16) in the circulation system (14), said inlet space communicating with and being common to the inlet units.

4. A nuclear reactor according to claim 3, **characterized** in that between the inlet space (62) and the density lock (17a), arranged at a lower level, there is arranged a buffer volume (64), which is separated from the inlet space (63) by a partition (65) and which is arranged in communicating connection with the inlet units (62) via individual pipes (66), which penetrate the partition and extend through the inlet space.

5. A nuclear reactor according to claim 4, **characterized** in that each one of the individual pipes (66) comprises an upper part (66a) fixed to an inlet unit in the form of an inlet box, and a lower part (66b) fixed to the partition (65), said parts being adapted to form with each other, during operation of the reactor, a connection which is sealed from the surroundings, and being adapted to be separable when withdrawing the fuel assemblies (60).

6. A nuclear reactor according to any of the preceding claims, **characterized** in that diffusers (67) which are located in the peripheral parts of the reactor core (11) are arranged with a smaller flow area than diffusers which are located in the centre of the reactor core.

FIG. 1

## FIG. 2

FIG. 3

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 271 890 (AB ASEA-ATOM)<br>* column 8, line 25 - column 9, line 19 *<br>* column 11, line 32 - column 12, line 13; figures 1,4,8 *<br>--- | 1,3 | G21C15/18<br>G21C9/033 |
| A | EP-A-0 359 716 (ANSALDO S.P.A.)<br>* column 5, line 3 - column 6, line 3; figures 1,2 *<br>--- | 1 | |
| A,D | FR-A-2 502 828 (AB ASEA-ATOM)<br>----- | | |

| | |
|---|---|
| | TECHNICAL FIELDS SEARCHED (Int. Cl.5 ) |
| | G21C |

The present search report has been drawn up for all claims

| Place of search | Date of completion of the search | Examiner |
|---|---|---|
| THE HAGUE | 12 JUNE 1992 | JANDL F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)